# EUROPÄISCHE PATENTANMELDUNG

(11) **EP 3 786 573 A1**
(43) Veröffentlichungstag der Anmeldung: **03.03.2021**
(21) Anmeldenummer: 19194509.6
(22) Anmeldetag: 30.08.2019
(51) Int. Cl.: G01B 11/00, G01B 11/24

(54) **OPTISCHE KOORDINATEN-MESSVORRICHTUNG UND VERFAHREN ZUM BETREIBEN EINER SOLCHEN VORRICHTUNG**

(71) Anmelder: Klingelnberg GmbH, 42499 Hückeswagen (DE)
(72) Erfinder: Finkeldey, Markus, 44801 Bochum (DE); Reuter, Fabian, 50825 Köln (DE)
(74) Vertreter: Heusch, Christian

(57) **Zusammenfassung**

Optische Koordinaten-Messvorrichtung (10) mit
- einer Lichtquelle (LQ), die dazu ausgelegt entweder Licht in einem ersten, schmalen Wellenlängenbereich oder Licht in einem zweiten, breiteren Wellenlängenbereich auszusenden, oder mit einer Lichtquelle (LQ), die dazu ausgelegt Licht (LS) in einem breitbandigen Wellenlängenbereich auszusenden,
- einen optischen Sensor (20),
- einer Optikanordnung (24), die dazu ausgelegt Licht (LS) der Lichtquelle (LQ) in Richtung einer Objektebene (OE) zu führen und Licht (LR), das an der Objektebene (OE) reflektiert und/oder gestreut wird, zu dem optischen Sensor (20) zu führen,
wobei
- die Messvorrichtung (10) dazu ausgelegt ist mindestens in einem ersten Betriebsmodus (M1) und in einem zweiten Betriebsmodus (M2) betrieben zu werden,
und wobei
- entweder im ersten Betriebsmodus (M1) von der Lichtquelle (LQ) Licht (LS) in dem ersten, schmalen Wellenlängenbereich und im zweiten Betriebsmodus (M2) von der Lichtquelle (LQ) Licht (LS) in dem zweiten, breiteren Wellenlängenbereich ausgesendet wird,
- oder im ersten Betriebsmodus (M1) von der Lichtquelle (LQ) Licht (LS) in dem breitbandigen Wellenlängenbereich ausgesendet und von dem optischen Sensor (20) Licht (LR) in einem ersten Teilbereich des breitbandigen Wellenlängenbereichs ausgewertet wird und im zweiten Betriebsmodus (M2) von der Lichtquelle (LQ) Licht (LS) in dem breitbandigen Wellenlängenbereich ausgesendet und von dem optischen Sensor (20) Licht (LR) in einem zweiten Teilbereich des breitbandigen Wellenlängenbereichs ausgewertet wird.

## Beschreibung

Die Erfindung betrifft eine optische Koordinaten-Messvorrichtung, wobei die Messvorrichtung speziell zum optischen Messen von Zahnrad-Bauteilen ausgelegt ist. Außerdem betrifft die Erfindung ein Verfahren zum Betreiben einer optischen Koordinaten-Messvorrichtung.

### HINTERGRUND DER ERFINDUNG

In vielen technischen Bereichen ist das exakte Vermessen eines Bauteils oder einer Bauteiloberfläche von großer Bedeutung. Es gibt z.B. verschiedene Messvorrichtungen zum berührenden und zum berührungslosen Erfassen der Beschaffenheit und des Profils von Oberflächen. Im vorliegenden Dokument geht es primär um das exakte Vermessen von Zahnradbauteilen und/oder um das exakte Vermessen der Oberflächen, z.B. der Zahnflanken, von Zahnradbauteilen. Diese Messaufgaben werden hier unter dem Begriff Verzahnungsmessung zusammengefasst.

Heute kommen teilweise für die Verzahnungsmessung optische Messverfahren zum Einsatz, um z.B. einzelne Zahnradbauteile aus einer Serienproduktion exemplarisch zu prüfen.

Das optische Messen von Verzahnungsoberfläche ist jedoch mit einigen Problemen verbunden, wie im Folgenden kurz dargestellt.

Optisch messende Sensoren eignen sich aus verschiedenen Gründen nur bedingt für die heutigen Anforderungen an die Verzahnungsmessung. Die besonderen Anforderungen oder Kriterien, die bei einer Verzahnungsmessung gelten, sind:
- ungünstige Antastwinkel,
- glatte Oberflächen z.B. der Zahnflanken,
- Abschattung durch benachbarte Zähne,
- hohe Anforderungen an die Messgenauigkeit (im Bereich von 0,1 - 0,5 Mikrometern),
- Verschmutzungsprobleme (z.B. durch Öl),
- Zerstörungsgefahr des Sensors bei einer Kollision mit einem Zahn des zu messenden Bauteils, und
- störende Brechungs- oder Reflektionseffekte z.B. durch Mehrfachreflexionen in engen Zahnlücken.

Die bekannten optisch arbeitenden, interferometrischen Sensoren sind sehr genau und haben eine hohe Auflösung. Bei diesem Sensortyp muss der Abstand zur Oberfläche allerdings klein sein und der Akzeptanzwinkel ist sehr gering. Das bedeutet, dass man, um diese Sensoren einsetzen zu können, beim Messen von Zahnflanken mit dem Sensorende in die Zahnlücke eintauchen muss. Für eine schnelle Messung ist es aber vorteilhaft, wenn sich der Sensor außerhalb der Zahnlücke befindet. Ausserdem sind solche interferometrischen Sensoren teuer.

Sensoren, die nach dem Prinzip eines Laser-Triangulationssensors arbeiten, zeichnen sich durch eine hohe Messfrequenz und einen großen Akzeptanzwinkel aus. Diese Sensoren können unterschiedliche Messbereiche, Arbeitsabstände und Auflösungen abdecken. Eine Sensoranordnung außerhalb der Zahnlücke, die für schnelle Messungen benötigt wird, ist somit möglich. Leider sind jedoch die Laser-Triangulationssensoren für Verzahnungsmessungen nur dann ausreichend genau, wenn der Messbereich klein (2-5mm) und der Messabstand gering ist (10-50mm). Laser-Triangulationssensoren sind zudem besonders empfindlich im Bezug auf Mehrfachreflektionen, da sie im Gegensatz zu interferometrischen und konfokal-chromatischen Sensoren über keine optische Tiefenselektion verfügen.

Es gibt auch konfokal-chromatische, optische Sensoren. Ein konfokal-chromatischer, optischer Sensor hat eine hohe Auflösung, benötigt aber eine große numerische Apertur, wenn man die oben genannten Bedingungen erfüllen möchte. Solche konfokal-chromatischen, optischen Sensoren eigen sich daher nur bedingt für Verzahnungsmessungen. Ein konfokal-chromatisches System braucht zudem eine spektral breite Lichtquelle mit einem möglichst homogenen Spektrum.

Es besteht der Bedarf schnelle und genaue Verzahnungsmessungen, z.B. im Rahmen der Serienproduktion von Zahnrad-Bauteilen, vornehmen zu können, um z.B. jedes einzelne Zahnrad-Bauteil während oder unmittelbar nach der Produktion prüfen zu können.

Es ist eine Aufgabe der Erfindung eine Vorrichtung bereit zu stellen, die es ermöglicht schnelle und präzise Messungen an Zahnrad-Bauteilen vorzunehmen.

Insbesondere Messaufgaben, die eine lange Messzeit haben und sehr häufig an Verzahnungen durchgeführt werden, sollen durch die Vorrichtung der Erfindung schneller durchgeführt werden können.

Eine solche Messaufgabe ist z.B. die Teilungsmessung, bei der der Abstand von Zahnflanke zu Zahnflanke bestimmt wird, während sich das Zahnradbauteil an dem optischen Sensor vorbeidreht.

Die Aufgabe wird durch eine optische Messvorrichtung, insbesondere eine optisch Koordinaten-Messvorrichtung, gemäß Anspruch 1 gelöst.

Eine erfindungsgemäße optische Koordinaten-Messvorrichtung umfasst
- eine Lichtquelle, die dazu ausgelegt entweder Licht in einem ersten, schmalen Wellenlängenbereich oder Licht in einem zweiten, breiteren Wellenlängenbereich auszusenden, oder eine Lichtquelle, die dazu ausgelegt Licht in einem breitbandigen Wellenlängenbereich auszusenden,
- einen optischen Sensor,
- eine Optikanordnung, die dazu ausgelegt Licht der Lichtquelle in Richtung einer Objektebene zu führen und Licht, das an der Objektebene reflektiert und/oder gestreut wird, zu dem optischen Sensor zu führen,
   wobei
- die Messvorrichtung dazu ausgelegt ist mindestens in einem ersten Betriebsmodus und in einem zweiten Betriebsmodus betrieben zu werden,
   und wobei
- entweder im ersten Betriebsmodus von der Lichtquelle Licht in dem ersten, schmalen Wellenlängenbereich und im zweiten Betriebsmodus von der Lichtquelle Licht in dem zweiten, breiteren Wellenlängenbereich ausgesendet wird,
- oder im ersten Betriebsmodus von der Lichtquelle Licht in dem breitbandigen Wellenlängenbereich ausgesendet und von dem optischen Sensor Licht in einem ersten Teilbereich des breitbandigen Wellenlängenbereichs ausgewertet wird und im zweiten Betriebsmodus von der Lichtquelle Licht in dem breitbandigen Wellenlängenbereich ausgesendet und von dem optischen Sensor Licht in einem zweiten Teilbereich des breitbandigen Wellenlängenbereichs ausgewertet wird.

Eine Koordinaten-Messvorrichtung umfasst mindestens eine NC-gesteuerte Achse, um mindestens die Optikanordnung relativ zu dem Zahnrad-Bauteil bewegen zu können. Vorzugsweise umfasst die Koordinaten-Messvorrichtung mehrere NC-gesteuerte Achsen, um relative Zustellbewegungen mindestens der Optikanordnung ausführen zu können.

Bei allen Ausführungsformen können diese relative Zustellbewegungen Bewegungen sein, die erforderlich sind, um z.B.
- ein Zahnrad-Bauteil durch ein Drehantreiben einer Zahnradaufnahme um eine als Rotationsachse dienende gesteuerte Achse in eine geeignete Ausgangswinkelposition zu drehen,
- den relativen Abstand zwischen dem Zahnrad-Bauteil, respektive der Objektebene des Zahnrad-Bauteils und der Optikanordnung einzustellen (z.B. durch eine Linearbewegung einer Achse),
- das Zahnrad-Bauteil relativ zu der Optikanordnung in eine geeignete Höhenposition zu bringen (z.B. durch eine Linearbewegung einer Achse),
- das Zahnrad-Bauteil relativ zu der Optikanordnung in eine geeignete Horizontalposition zu bringen (z.B. durch eine Linearbewegung einer Achse).

Es können bei allen Ausführungsformen auch zwei oder mehr als zwei der beispielhaft genannten Bewegungen ausgeführt werden.

Der Nennabstand (auch Meßabstand genannt) der Optikanordnung zur Objektebene kann mindestens bei einem Teil der Ausführungsformen beispielsweise im Bereich von 5 bis 50 mm liegen, wobei hier der Nennabstand als Arbeitsabstand zwischen dem letzten optischen Element der Optikanordnung (in Messrichtung betrachtet) und der Objektebene definiert ist. Bei einem Teil der Ausführungsformen kann der Nennabstand (auch Meßabstand genannt) auch im Bereich von 1 bis 5 mm liegen. Mit einem solch geringen Nennabstand können z.B. Kleinstverzahnungen gemessen werden.

Die Koordinaten-Messvorrichtung der Erfindung ermöglicht eine hochgenaue Positionierung mindestens der Drehachse oder einer Linearachse, wobei diese oder mehrere der Achsen der Koordinaten-Messvorrichtung NCgesteuert sind.

Gemäß Erfindung können die folgenden Arten der Auswertung des vom Sensor empfangenen, reflektierten/gestreuten Lichtanteils vorgenommen werden:
- Spektrale Auswertung im Sinne einer konfokal chromatischen Auswertung sowohl des schmalen als auch des größeren (breitbandigen) Wellenlängenbereichs. Hierbei ist der Messbereich in dem schmaleren Wellenlängenbereich eingeschränkt, die erreichbare Genauigkeit jedoch erhöht. In dem breitbandigen Wellenlängenbereich kann beispielsweise eine vollständige Digitalisierung der Messungen vorgenommen werden, während in dem schmalen Wellenlängenbereich nur Teilungsmessung vorgenommen werden.
- Konfokal chromatische Auswertung für den großen (breitbandigen) Wellenlängenbereich und nur eine konfokale Auswertung für den schmalen Wellenlängenbereich. Dabei sollte der schmale Wellenlängenbereich sehr klein, optimaler Weise monochromatisch sein.
- Konfokal chromatische Auswertung von zwei unterschiedlichen, breitbandigen Auswertebereichen. Der erste breitbandige Auswertebereich kann z.B. im sichtbaren Wellenlängenbereich und der zweite breitbandige Auswertebereich im NIR (Nahinfrarot) Bereich liegen. Hierbei kann jedoch auch einer der Auswertebereiche deutlich schmaler ausgelegt sein. Beispielsweise kann ein großer (breitbandiger) sichtbarer Wellenlängenbereich zu Digitalisierung der gewonnenen Daten dienen und ein schmaler(er) NIR Bereich kann z.B. zur Teilungsmessung dienen.

Aus einem Mess-Signal der Koordinaten-Messvorrichtung kann optional bei allen Ausführungsformen der aktuelle (Mess-)Abstand zwischen der Optikanordnung und der Objektebene und/oder die aktuelle Winkelposition der Objektebene quantitativ ermittelt werden.

Aus einem Mess-Signal des optischen Sensors kann optional bei allen Ausführungsformen der aktuelle Abstand zwischen dem Mess-Sensor und der Objektebene und/oder die aktuelle Winkelposition der Objektebene qualitativ ermittelt werden.

Besonders bevorzugt sind Ausführungsformen der Erfindung, deren Messverfahren darauf beruht, dass das Zahnrad-Bauteil drehangetrieben wird, während der optische Sensor permanent oder zeitweise (z.B. getaktet) Messungen vornimmt.

Bisher hat eine taktile Teilungsmessung an einem Zahnrad-Bauteil pro Zahnflanke mehrere Sekunden gedauert, woraus sich für das gesamte Zahnrad-Bauteil eine Messzeit von mehreren Minuten ergeben kann. Mit einer Koordinaten-Messvorrichtung der Erfindung, die mit einem Regelsystem in Form von Hardware und/oder Software ausgestattet ist, können z.B. Messung in mindestens zwei unterschiedlichen Betriebsmodi an demselben Zahnrad-Bauteil schneller und hochgenau erfolgen.

Die Erfindung lässt sich im Zusammenhang mit 1D-, 2D- und 3D-Oberflächen-Messungen an Zahnrädern verwenden.

### ZEICHNUNGEN

Ausführungsbeispiele der Erfindung werden im Folgenden unter Bezugnahme auf die Zeichnungen näher beschrieben.
- **FIG. 1**: zeigt eine schematische Darstellung einer beispielhaften optischen Messanordnung gemäß einer ersten Ausführungsform;
- **FIG. 2**: zeigt eine schematische Darstellung eines Teils einer Ausführungsform;
- **FIG. 3A**: zeigt eine schematische Darstellung einer Ausführungsform einer Schmalband-Lichtquelle und des ausgesendeten Lichtspektrums;
- **FIG. 3B**: zeigt eine schematische Darstellung einer Ausführungsform einer Breitband-Lichtquelle und des ausgesendeten breiteren Lichtspektrums;
- **FIG. 4**: zeigt eine schematische Darstellung einer Ausführungsform einer Lichtquelle, die durchstimmbar ist;
- **FIG. 5**: zeigt eine schematische Darstellung einer Ausführungsform eines hybriden optischen Sensors;
- **FIG. 6**: zeigt eine schematische Darstellung einer beispielhaften optischen Messanordnung gemäß einer weiteren Ausführungsform;
- **FIG. 7**: zeigt eine schematische Darstellung einer beispielhaften optischen Messanordnung gemäß einer weiteren Ausführungsform;
- **FIG. 8A**: zeigt eine schematische Darstellung einer beispielhaften optischen Messanordnung gemäß einer weiteren Ausführungsform, wobei diese Messanordnung im gezeigten Moment im ersten Betriebsmodus betrieben wird;
- **FIG. 8B**: zeigt eine schematische Darstellung eines ausgesendeten Lichtspektrums im ersten Betriebsmodus;
- **FIG. 8C**: zeigt eine schematische Darstellung eines empfangenen Lichtspektrums im ersten Betriebsmodus;
- **FIG. 8D**: zeigt eine schematische Darstellung der optischen Messanordnung der Fig. 8A, wobei diese Messanordnung im gezeigten Moment im zweiten Betriebsmodus betrieben wird;
- **FIG. 8E**: zeigt eine schematische Darstellung eines ausgesendeten Lichtspektrums im zweiten Betriebsmodus;
- **FIG. 8F**: zeigt eine schematische Darstellung eines empfangenen Lichtspektrums im zweiten Betriebsmodus.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

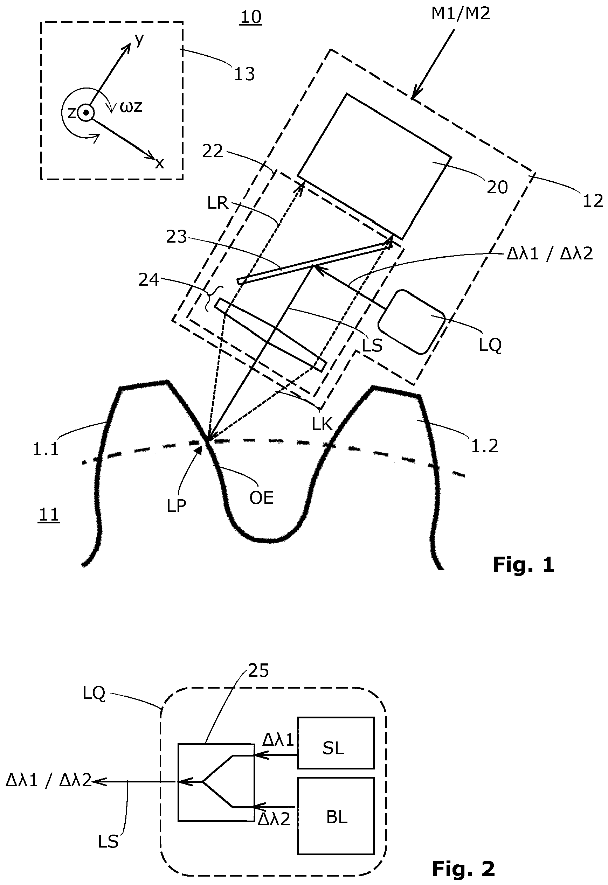

Das Grundprinzip der Erfindung wird im Folgenden anhand der schematisierten Darstellung der Fig. 1 beschrieben. In Fig. 1 sind lediglich zwei benachbarte Zähne 1.1 und 1.2 eines Zahnrad-Bauteils 11 gezeigt. Die optische Koordinaten-Messvorrichtung 10 umfasst mindestens einen opto-elektronischen Teil 12 und optional einen NC-gesteuerten Teil 13. Der NC-gesteuerte Teil 13 kann beispielsweise, wie in Fig. 1 dargestellt, 4 NC-gesteuerte Achsen umfassen. Im gezeigten Beispiel kommen 3 Linearachsen zum Einsatz, die z.B. parallel zu den x, y, z-Achsen eines Koordinatensystems bewegbar sind. Außerdem kann eine NC-gesteuerte Drehachse vorgesehen sein, die hier mit dem Bezugszeichen ωz bezeichnet ist. Der opto-elektronische Teil 12 kann zum Beispiel so in die Koordinaten-Messvorrichtung 10 integriert oder an diese angebaut sein, dass dieser durch Bewegungen der 3 Linearachsen relativ zum Zahnrad-Bauteil 11 verlagert werden kann. Die NC-gesteuerte Drehachse ωz hingegen kann beispielweise dem Zahnrad-Bauteil 11 zugewiesen sein, um ein Drehen des Zahnrad-Bauteils 11 relativ zum opto-elektronischen Teil 12 zu ermöglichen.

Die Darstellung lässt erkennen, dass einerseits der Platz, der für eine hochgenaue und präzise optische Messung zur Verfügung steht, begrenzt ist, und dass andererseits die Objektebene OE (im gezeigten Beispiel eine Zahnflanke der Zahnes 1.1) schräg angestrahlt werden muss. Außerdem ist in Fig. 1 der Strahlengang des opto-elektronischen Teils einer optischen Koordinaten-Messvorrichtung 10 schematisch dargestellt.

Der opto-elektronische Teil 12 der Koordinaten-Messvorrichtung 10 umfasst eine Lichtquelle LQ, die dazu ausgelegt entweder Licht in einem ersten, schmalen Wellenlängenbereich Δλ1 oder Licht in einem zweiten, breiteren Wellenlängenbereich Δλ2 auszusenden. Außerdem umfasst der opto-elektronische Teil 12 eine Optikanordnung 22 und einen optischen Sensor 20. Die Optikanordnung 22 ist dazu ausgelegt Licht LS der Lichtquelle LQ in Richtung einer Objektebene OE zu führen und Licht LR, das an der Objektebene OE reflektiert und/oder gestreut wird, zu dem optischen Sensor 20 zu führen.

Die optische Messvorrichtung 10 ist bei mindestens einem Teil der Ausführungsformen dazu ausgelegt mindestens in einem ersten Betriebsmodus M1 und in einem zweiten Betriebsmodus M2 betrieben zu werden.

Es werden im Folgenden zwei Gruppen von Ausführungsformen unterschieden.

Bei einer ersten Gruppe G1 von Ausführungsformen wird in dem ersten Betriebsmodus M1 Licht LS in dem ersten, schmalen Wellenlängenbereich Δλ1 und im zweiten Betriebsmodus M2 Licht LS in dem zweiten, breiteren Wellenlängenbereich Δλ2 von der Lichtquelle LQ ausgesendet, wobei gilt: Δλ2 > Δλ1. In dem ersten Betriebsmodus M1 wird von dem optischen Sensor 20 reflektiertes oder gestreutes Licht LR in dem ersten, schmalen Wellenlängenbereich Δλ1 ausgewertet und im zweiten Betriebsmodus M2 wird von dem optischen Sensor 20 reflektiertes oder gestreutes Licht LR dem zweiten, breiteren Wellenlängenbereich Δλ2 ausgewertet.

Bei einer zweiten Gruppe G2 von Ausführungsformen wird sowohl in dem ersten Betriebsmodus M1 als auch im zweiten Betriebsmodus M2 Licht LS in einem breitbandigen Wellenlängenbereich Δλ3 ausgesendet. In dem ersten Betriebsmodus M1 wird von dem optischen Sensor 20 reflektiertes oder gestreutes Licht LR in einem ersten Teilbereich des breitbandigen Wellenlängenbereichs Δλ3 ausgewertet und im zweiten Betriebsmodus M2 wird von dem optischen Sensor 20 reflektiertes oder gestreutes Licht LR in einem zweiten Teilbereich des breitbandigen Wellenlängenbereichs Δλ3 ausgewertet.

Bei dem ersten Betriebsmodus M1 handelt es sich bei allen Ausführungsformen vorzugsweise um einen (monochromatischen) konfokal-optischen Betriebsmodus und bei dem zweiten Betriebsmodus M2 um einen konfokal-chromatisch optischen Betriebsmodus.

Im Folgenden werden einige der Komponenten oder Bauteile der Koordinaten-Messvorrichtung 10 verschiedener Ausführungsformen beschrieben, bevor auf die Funktion der Messvorrichtung 10 eingegangen wird.

Die Lichtquelle LQ kann bei allen Ausführungsformen
A1. eine (justier-, schalt- oder stimmbare) Lichtquelle LQ umfassen, die schaltungstechnisch und/oder steuerungstechnisch so betrieben werden kann, dass sie entweder Licht LS in dem ersten, schmalen Wellenlängenbereich Δλ1 oder Licht LS in dem zweiten, breiteren Wellenlängenbereich Δλ2 aussendet;
A2. eine hybride Lichtquelle umfassen (siehe z.B. Fig. 2), die mindestens zwei lichtemittierende Quellen umfasst, wobei eine erste der beiden lichtemittierenden Quellen (Schmalband-Lichtquelle genannt) Licht LS in dem ersten, schmalen Wellenlängenbereich Δλ1 und eine zweite der beiden lichtemittierenden Quellen (Breitband-Lichtquelle genannt) Licht LS in dem zweiten, breiteren Wellenlängenbereich Δλ2 aussendet;
A3. eine breitbandige Lichtquelle (Breitband-Lichtquelle genannt) umfassen, die Licht LS in einem breitbandigen Wellenlängenbereich Δλ3 aussendet.

Die Ausführungsformen A1 und A2 lassen sich vorzugsweise auf die Gruppe G1 anwenden. Die Ausführungsformen A3 lassen sich vorzugsweise auf die Gruppe G2 anwenden.

Der optische Sensor 20 kann bei allen Ausführungsformen
B1. so ausgelegt und/oder aufgebaut sein, dass er entweder Licht LR in einem schmalen Wellenlängenbereich (z.B. in dem Wellenlängenbereich Δλ1) oder Licht LR in einem breiteren Wellenlängenbereich (z.B. in dem Wellenlängenbereich Δλ2) auswertet;
B2. mindestens zwei Sensoren oder Detektoren umfassen, wobei ein erster der beiden Sensoren oder Detektoren so ausgelegt und/oder aufgebaut ist, dass er Licht LR in einem schmalen Wellenlängenbereich (z.B. in dem Wellenlängenbereich Δλ1) auswertet, und wobei ein zweiter der beiden Sensoren oder Detektoren so ausgelegt und/oder aufgebaut ist, dass er Licht LR in einem breiteren Wellenlängenbereich (z.B. in dem Wellenlängenbereich Δλ2) auswertet.

Die Ausführungsformen B1 lassen sich vorzugsweise auf die Gruppen G1 und G2 anwenden. Die Ausführungsformen B2 lassen sich vorzugsweise auf die Gruppen G1 und G2 anwenden.

Wie in Fig. 1 beispielhaft und schematisch gezeigt, können alle Ausführungsformen eine Optikanordnung 22 umfassen. Als Optikanordnung 22 wird hier der Bereich zwischen der Lichtquelle LQ und der Objektebene OE und der Bereich zwischen der Objektebene OE und dem optischen Sensor 20 bezeichnet.

Bei allen Ausführungsformen verläuft der ausgesendete Lichtstrahl LS in beiden Betriebsmodi M1, M2 im Wesentlichen entlang derselben optischen Achse OA durch die Optikanordnung 22. D.h., in beiden Betriebsmodi M1, M2 kommt dieselbe Optikanordnung 22 zum Einsatz.

Die Optikanordnung 22 kann bei allen Ausführungsformen zum Beispiel als freistrahloptischer Bereich ausgelegt sein, wie in Fig. 1 gezeigt. Die Optikanordnung 22 kann bei allen Ausführungsformen aber auch mindestens teilweise mit optischen Fasern und/oder Wellenleitern ausgestattet sein. Es sind bei allen Ausführungsformen auch Kombinationen eines freistrahloptischen Bereichs mit mindestens einer optischen Faser und/oder mindestens einem Wellenleiter möglich.

Die Optikanordnung 22 der Fig. 1 umfasst (von der Lichtquelle LQ zum optischen Sensor 20 betrachtet) einen Strahlteiler 23, der dazu ausgelegt ist einen Lichtstrahl aufzuteilen. Ein Großteil des Lichtstrahls (z.B. mit einer Wellenlänge im Bereich Δλ1), der von der Lichtquelle LQ emittiert wird, wird durch den Strahlteiler 23 abgelenkt und durch eine Abbildungsoptik 24 hindurch auf die Objektebene OE fokussiert. Licht LR, das an der Objektebene OE reflektiert oder gestreut wird, wird durch die Abbildungsoptik 24 zurück in Richtung des Strahlteilers 23 geführt. Der Strahlteiler 23 lässt einen möglichst großen Anteil des Lichts LR hindurchtreten, um diesen Anteil zu dem optischen Sensor 20 zu führen. Der Anteil, der zu dem optischen Sensor 20 geführt wird, sollte möglichst eine hohe Lichtintensität haben.

Da die optische Messvorrichtung 10 in mindestens zwei unterschiedlichen Modi M1, M2 betrieben werden kann, sollte der Strahlteiler 23 bei allen Ausführungsformen möglichst breitbandig ausgelegt sein.

In Fig. 1 ist das Umschalten zwischen den beiden Modi M1 und M2 durch einen (Ansteuer-)Pfeil M1/M2 dargestellt.

Bei allen Ausführungsformen kann ein Strahlteiler 23 zum Einsatz kommen, der zur nicht-selektiven Intensitätsaufteilung eines einfallenden Lichtstrahls in zwei abgehende Lichtstrahlen dient, wobei eine Intensitätsaufteilung mit einem Teilungsverhältnis erfolgt. Vorzugsweise kommt bei allen Ausführungsformen ein Strahlteiler 23 zum Einsatz, dessen Teilungsverhältnis größer ist als 80:20 (d.h., beispielweise ca. 80% des an der Objektebene OE reflektierten/gestreuten Lichts LR tritt durch den Strahlteiler 23 hindurch und ca. 20% wird zurück in Richtung der Lichtquelle LQ umgeleitet).

Bei allen Ausführungsformen kann als Strahlteiler 23 eine der folgenden Komponenten/Elemente zum Einsatz kommen (die folgende Liste ist nur als Beispiel zu verstehen und ist nicht abschließend formuliert):
- Strahlteilerplatte (z.B. ein halbdurchlässiger Spiegel oder eine beschichtetes (Glas-)Substrat),
- Strahlteilerwürfel (z.B. aus zwei zusammengefügten Prismen),
- Prismenstrahlteiler,
- Polka-Dot-Strahlteiler,
- Pellicle-Strahlteiler,
- Reflexionsstrahlteiler,
- Gitter-Strahlteiler,
- Fiber-optischer Strahlteiler,
- Wellenleiter-Strahlteiler.

Vorzugsweise kommt bei allen Ausführungsformen ein Detektor oder eine Auswertevorrichtung als optischer Sensor 20 zum Einsatz, der/die als Spektrometer ausgelegt ist, oder die nach dem Prinzip der Spektrometrie arbeitet.

Bei mindestens einem Teil der Ausführungsformen handelt es sich bei dem ersten Betriebsmodus M1 um einen (quasi-monochromatischen) konfokal-optischen Betriebsmodus und bei dem zweiten Betriebsmodus M2 um einen konfokal-chromatisch optischen Betriebsmodus.

In dem konfokal-chromatisch optischen Betriebsmodus kommt/kommen bei mindestens einem Teil der Ausführungsformen
- ein konfokal-chromatischer, optischer Sensor, vorzugsweise ein Spektrometer, als optischer Sensor 20, und/oder
- eine Breitband-Lichtquelle als Lichtquelle LQ
zum Einsatz.

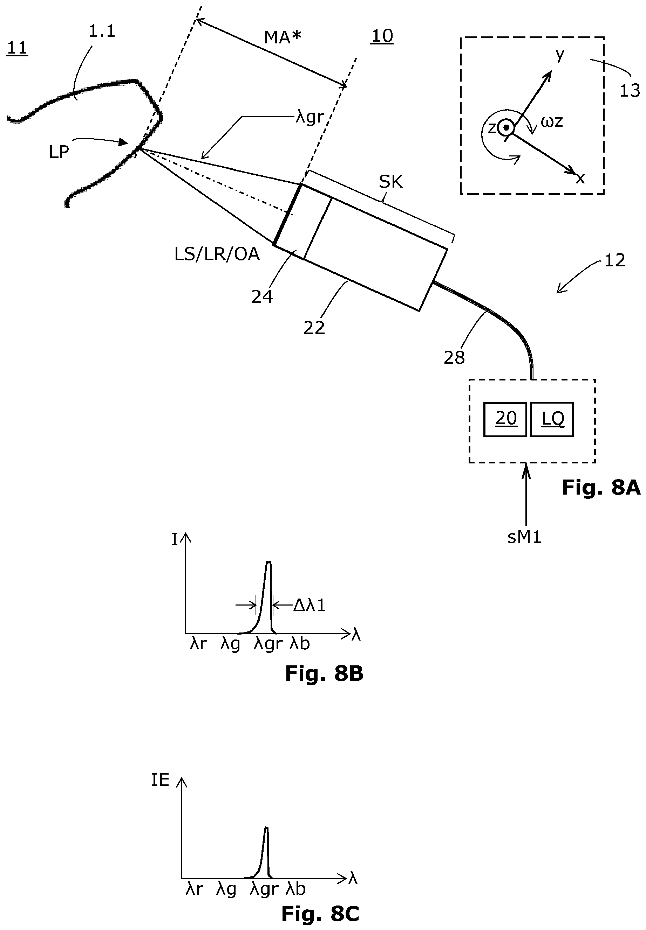

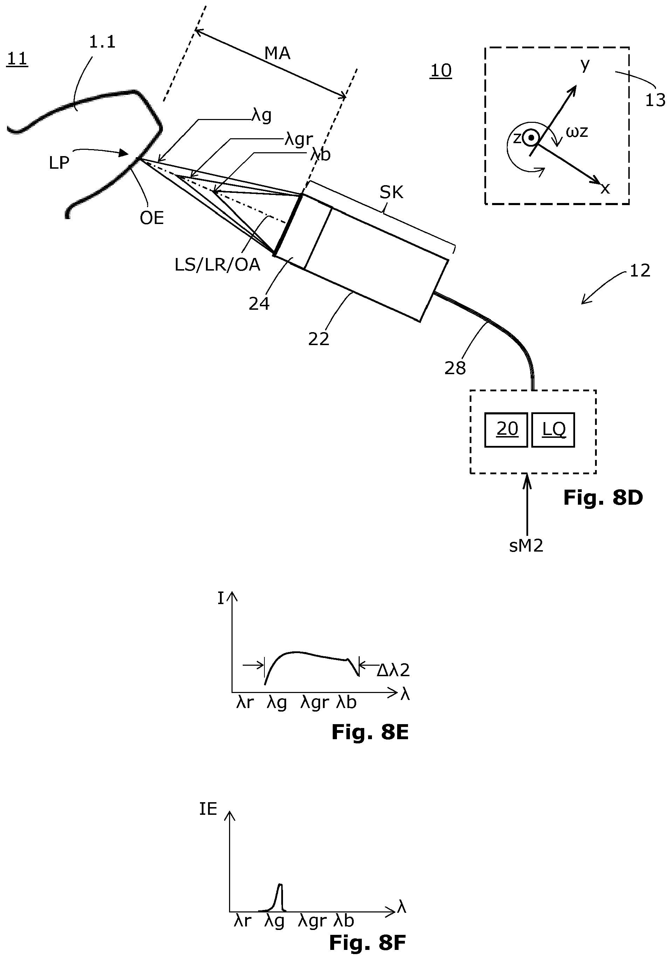

Für den konfokal-chromatischen Betrieb, umfasst die Vorrichtung 10, wie beispielhaft in Fig. 8A und 8F gezeigt, typischerweise eine breitbandige Lichtquelle LQ (z.B. in Form einer Weisslichtquelle LQ, die ein Spektrum von 400nm bis 800nm mit möglichst gleichmäßiger Lichtintensität I abdeckt) und optische Elemente (z.B. eine Abbildungsoptik 24 und eine oder mehrere optische Singlemode- oder Multimode-Fasern 28), um das Licht LS von der Lichtquelle LQ zu einer Objektebene OE und von dort zurück zu dem optischen Sensor 20 (z.B. ein Spektrometer) zu leiten. Ein Strahlteiler 23, welcher z.B. in einem freistrahloptischen Bereich der Vorrichtung 10 angeordnet ist, wie in Fig. 1 gezeigt, sorgt dafür das, dass reflektierte/gestreute Licht LR in Richtung des optischen Sensors 20 geführt wird. Der optische Sensor 20 kann z.B. anhand der Intensität der einzelnen (unterschiedlich farbigen) Wellenlängenanteile eine Aussage über den aktuellen Abstand des opto-elektronischen Teils 12 zu der zu messenden Objektebene OE machen.

Anstelle einer freistrahl-optischen Konstellation (wie z.B. in den Figuren 1, 6 und 7 gezeigt), kann der Sensor 20 auch eine oder mehrere optische Multimode-Fasern 28 umfassen, um das Licht LS gezielt führen zu können. Eine optische Faser wird als Multimode-Faser bezeichnet, falls sich mehrere Moden in dieser Faser ausbreiten können.

In einer solchen Vorrichtung 10, die eine oder mehrere Multimode-Fasern umfasst, entsteht durch ein räumliches Aufspalten des breitbandigen Lichts in einzelne (unterschiedlich farbige) Wellenlängenanteile ein breiter Lichtkegel in lateraler Richtung, d.h. quer zur Ausbreitungsrichtung des Lichtstrahls LS. Um spektral möglichst breitbandig zu sein und um viel Licht LS von der Lichtquelle LQ in eine Multimode-Faser einkoppeln zu können, wird eine Multimode-Faser mit relativ großem Kern-Durchmesser gewählt (typischerweise 50 - 60 µm).

Will man im konfokal-chromatischen, optischen Betriebsmodus Abschattungen des Lichtkegels LK an benachbarten Zähnen 1.2 eines Zahnrad-Bauteils 11 vermeiden, entstehen bei der Verzahnungsmessung ungünstige steile Antastwinkel. Bei einem steilen Antastwinkel empfängt die Vorrichtung 10 jedoch kein brauchbares reflektiertes Lichtsignal. Daher kann in einem vorgeschalteten Betriebsmodus (z.B. im ersten Betriebsmodus M1) eine Messung in einem schmalbandigen Wellenlängenbereich vorgenommen werden, um auf diesem Wege zum Beispiel einen Messabstand MA* anhand NC-gesteuerter Achsbewegungen voreinzustellen. Danach kann dann in einem (nahezu) idealen Messabstand eine konfokal-chromatische, optische Messung in einem breitbandigen Wellenlängenbereich erfolgen.

In dem (quasi-monochromatischen) konfokal-optischen Betriebsmodus kommt/kommen bei mindestens einem Teil der Ausführungsformen
- ein Halbleiterdetektor als optischer Sensor 20, und/oder
- eine Schmalband-Lichtquelle als Lichtquelle LQ
zum Einsatz.

Die Ausführungsformen A2 umfassen beispielsweise eine hybride Lichtquelle LQ, wie in Fig. 2 gezeigt. Die hybride Lichtquelle LQ umfasst mindestens zwei lichtemittierende Quellen SL und BL, wobei eine erste der beiden lichtemittierenden Quellen (Schmalband-Lichtquelle SL genannt) Licht LS in dem ersten, schmalen Wellenlängenbereich Δλ1 und eine zweite der beiden lichtemittierenden Quellen (Breitband-Lichtquelle BL genannt) Licht LS in dem zweiten, breiteren Wellenlängenbereich Δλ2 aussendet. Es kommt bei den Ausführungsformen A2 vorzugsweise ein optischer Koppler (z.B. ein Wellenleiterkoppler) oder eine optische zwei-zu-eins oder zwei-zu-zwei Weiche 25 zum Einsatz, um Licht der Breitband-Lichtquelle BL und Licht der Schmalband-Lichtquelle SL zusammen zu führen.

Die meisten der Elemente/Bauteile, die weiter oben als mögliche Strahlteiler 23 genannt wurden, können bei mindestens einem Teil der Ausführungsformen auch als optische Koppler oder optische Weiche 25 zum Einsatz kommen, wobei ein Koppler oder eine Weiche 25 in die entgegengesetzte Richtung betrieben wird wie ein Strahlteiler 23, um z.B. aus zwei optischen Lichtstrahlen einen Lichtstrahl zu erzeugen.

In Fig. 2 ist ein optischer Koppler bzw. eine optische zwei-zu-eins Weiche 25 gezeigt, die auf der rechten Seite zwei Eingänge und auf der linken Seite einen Ausgang hat. Es können bei allen Ausführungsformen auch optische Koppler bzw. optische Weichen 25 zum Einsatz kommen, die zwei Ausgänge aufweisen (z.B. eine zwei-zu-zwei Weiche). Optional kann dieser zweite Ausgang mit einem beam-dump, beam-block oder beam-trap verbunden sein, um Licht, das diesen Ausgang verlässt, zu unterdrücken.

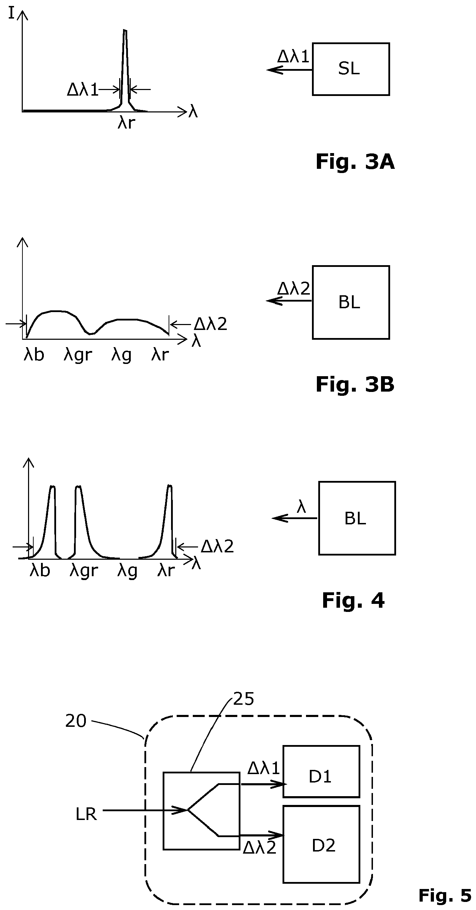

Fig. 3A zeigt eine schematische Darstellung einer Ausführungsform einer Schmalband-Lichtquelle SL und des ausgesendeten Lichtspektrums im Wellenlängenbereich Δλ1. In dem Diagramm (links in Fig. 3A) ist die Lichtintensität I des Lichts LS als Funktion der Wellenlänge λ aufgetragen. Die Schmalband-Lichtquelle SL hat im gezeigten Beispiel einen Intensitätspeak im roten Wellenlängenbereich λr. Als Schmalband-Lichtquelle SL kann bei allen Ausführungsformen z.B. ein Near-Infrared (NIR) Laser, eine NIR SLED (Superluminescent diode), oder eine NIR LED (light emitting diode) zum Einsatz kommen.

Fig. 3B zeigt eine schematische Darstellung einer Ausführungsform einer Breitband-Lichtquelle BL und des ausgesendeten Lichtspektrums im Wellenlängenbereich Δλ2. In dem Diagramm (links in Fig. 3B) ist die Lichtintensität I des Lichts LS als Funktion der Wellenlänge λ aufgetragen. Die Breitband-Lichtquelle BL hat beispielsweise einen Intensitätsverlauf, der sich vom blauen Wellenlängenbereich λb bis zum roten Wellenlängenbereich λr erstreckt. Als Breitband-Lichtquelle BL kann bei allen Ausführungsformen z.B. eine Weisslichtquelle zum Einsatz kommen.

Die Lichtquellen SL und BL der Figuren 3A und 3B können vorzugsweise mit einem Silizium-Detektor als optischem Sensor 20 kombiniert werden, da Silizium-Detektoren einen Absorptionsbereich von λb bis λr abdecken.

Fig. 4 zeigt eine schematische Darstellung einer Ausführungsform einer Lichtquelle BL und des ausgesendeten Lichtspektrums im Wellenlängenbereich Δλ2. In dem Diagramm (links in Fig. 4) ist die Lichtintensität I des Lichts LS als Funktion der Wellenlänge λ aufgetragen. Die Lichtquelle BL ist durchstimmbar und hat mehrere ausgeprägte Intensitätspeaks, die sich z.B. vom blauen Wellenlängenbereich λb über den grünen Wellenlängenbereich λgr bis zum roten Wellenlängenbereich λr erstrecken. Als durchstimmbare Lichtquelle BL kann bei allen Ausführungsformen zum Beispiel ein Gas-Laser (z.B. ein CO₂ oder ein He-Ne Laser), Flüssiglaser (z.B. ein dye Laser) oder Festkörperlaser (z.B. ein Übergangsmetall-Festkörper-Laser) dienen.

Als durchstimmbare Lichtquelle BL kann bei allen Ausführungsformen zum Beispiel ein Laser (z.B. ein Nd:YAG Laser) eingesetzt werden, der nach dem Prinzip des multi line tuning funktioniert.

Als durchstimmbare Lichtquelle BL kann bei allen Ausführungsformen zum Beispiel ein Laser (z.B. ein Nd:YAG Laser oder ein Argon-Ionen-Laser) eingesetzt werden, dessen Wellenlänge durch den Einsatz einen wellenlängenselektiven, dielektrischen Spiegels oder durch ein Dispersionselement (z.B. einen bewegliches Prisma in der Kavität des Lasers) durchgestimmt werden kann.

Anstatt eine durchstimmbare Lichtquelle BL zu verwenden, deren Intensitätspeak, wie in Fig. 4 dargestellt, in einem weiten Spektrum vorgegeben werden kann, können bei mindestens einem Teil der Ausführungsformen auch durchstimmbare Laser-Lichtquellen BL eingesetzt werden, die innerhalb eines engen Wellenlängenbereichs eingestellt werden können (z.B. ein Laser, der nach dem Prinzip des single line tuning funktioniert, oder ein Laser, der nach dem Prinzip des Narrowband tuning arbeitet).

Fig. 5 zeigt eine schematische Darstellung einer Ausführungsform eines hybriden optischen Sensors 20. Dieser hybride optische Sensor 20 umfasst mindestens zwei unterschiedliche Detektoren D1 und D2, wie gezeigt. Es kann ein optischer Schalter (z.B. ein mechanischer Strahlteiler oder ein beweglicher Spiegel) oder eine optische eins-zu-zwei Weiche 26 zum Einsatz kommen, um das reflektierte oder gestreute Licht LR dem ersten Detektor D1 oder dem zweiten Detektor D2 zuzuführen. Vorzugsweise kommt bei den Ausführungsformen mit hybridem optischen Sensor 20 ein Detektor D2 zum Einsatz, der als Spektrometer ausgelegt ist, oder der nach dem Prinzip der Spektrometrie arbeitet. Solch ein Detektor D2 kann im zweiten Betriebsmodus M2 als Teil des konfokal-chromatisch optischen Systems zum Einsatz kommen.

Bei den Ausführungsformen mit hybridem optischen Sensor 20, kann ein Detektor D1 zum Einsatz kommen, der als Lochblenden-Detektor ausgelegt ist.

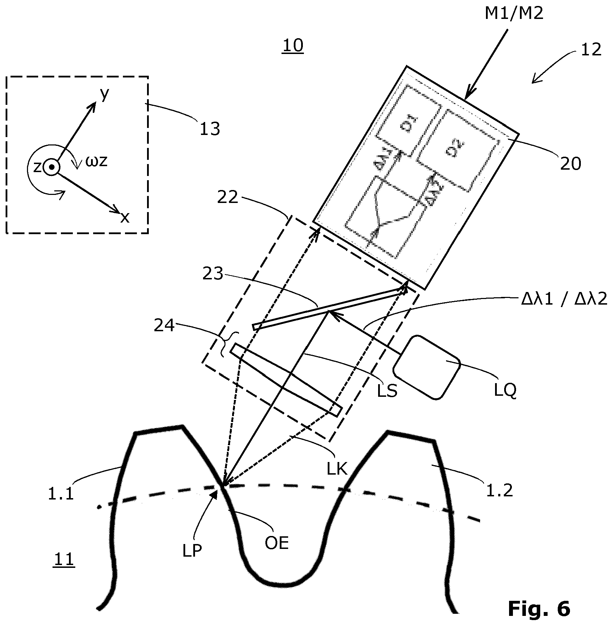

Fig. 6 zeigt eine schematische Darstellung einer beispielhaften hybriden optischen Koordinaten-Messanordnung 10 gemäß einer weiteren Ausführungsform. Diese Ausführungsform baut auf der Fig. 1 auf und es wird daher auch auf die Beschreibung der Fig. 1 verwiesen. Die Messanordnung 10 der Fig. 6 umfasst zum Beispiel eine Lichtquelle LQ gemäß Ausführungsform A1 oder A2. Der optische Sensor 20 kann z.B. gemäß Fig. 5 ausgelegt sein. Ein Schalt- oder Steuersignal M1/M2 kann zum Einsatz kommen, um diese Messanordnung 10 vom ersten Betriebsmodus M1 in den zweiten Betriebsmodus M2 (oder zurück) zu schalten. Im ersten Betriebsmodus M1 arbeitet der Detektor D1, um Licht im Wellenlängenbereich Δλ1 auszuwerten, und im zweiten Betriebsmodus M2 arbeitet der Detektor D2, um Licht im Wellenlängenbereich Δλ2 auszuwerten.

Bei allen Ausführungsformen A1 kann zum Beispiel ein lichtemittierendes Element zum Einsatz kommen (z.B. eine Blaulicht-LED oder ein Blaulicht-Laser), das durch den Einsatz einer Phosphorschicht in der Lage ist als Breitband-Lichtquelle zu dienen. Wenn eine Blaulicht-LED oder ein Blaulicht-Laser eingesetzt wird, die/der einen Intensitätspeak im Bereich von z.B. 420nm hat, dann kann man durch das Einbringen einer Phosphorschicht ein breitbandiges Spektrum zwischen ca. 420nm und 780nm erzeugen. Die Phosphorschicht kann zum Beispiel per Hand oder automatisch in den Strahlengang der Blaulicht-LED oder des Blaulicht-Lasers eingeschoben werden.

Bei Ausführungsformen A1 kann z.B. im ersten Betriebsmodus M1 die Blaulicht-LED oder der Blaulicht-Laser ohne Phosphorschicht betrieben werden, um ein erstes schmalbandiges Lichtspektrum im Bereich Δλ1 nahe von ca. 420nm auszusenden.

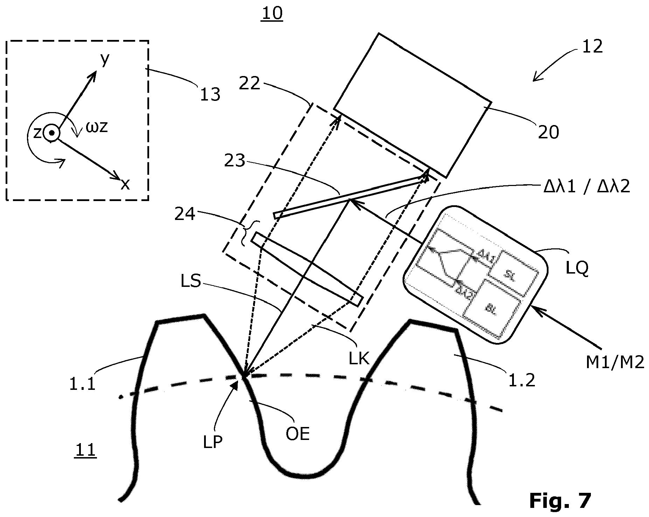

Fig. 7 zeigt eine schematische Darstellung einer beispielhaften hybriden optischen Messanordnung 10 gemäß einer weiteren Ausführungsform. Diese Ausführungsform baut auf der Fig. 1 auf und es wird daher auch auf die Beschreibung der Fig. 1 verwiesen. Die optische Messanordnung 10 der Fig. 7 umfasst zum Beispiel eine Lichtquelle LQ gemäß Ausführungsform A2. Die Lichtquelle LQ kann beispielsweise gemäß Fig. 2 ausgelegt sein. Der optische Sensor 20 kann beispielsweise als Spektrometer ausgelegt sein. Ein Schalt- oder Steuersignal M1/M2 kann zum Einsatz kommen, um diese optische Messanordnung 10 vom ersten Betriebsmodus M1 in den zweiten Betriebsmodus M2 (oder zurück) zu schalten. Im ersten Betriebsmodus M1 arbeitet die Schmalband-Lichtquelle SL, um Licht im Wellenlängenbereich Δλ1 auszusenden, und im zweiten Betriebsmodus M2 arbeitet die Breitband-Lichtquelle BL, um Licht im Wellenlängenbereich Δλ2 auszusenden. Der optische Sensor 20 arbeitet sowohl im ersten Betriebsmodus M1 als auch im zweiten Betriebsmodus M2.

Es ist bei allen Ausführungsformen auch eine Kombination der Ausführungsformen der Fig. 6 und 7 möglich. Im Falle einer solchen Kombination umfasst die Lichtquelle LQ beispielsweise eine Ausführungsform gemäß Fig. 2 und der optische Sensor 20 eine Ausführungsform gemäß Fig. 5.

Die Figuren 8A-8F zeigen schematische Darstellungen einer beispielhaften optischen Messanordnung 10 gemäß einer weiteren Ausführungsform. In Fig. 8A ist die optische Messanordnung 10 in einem ersten Betriebsmodus M1 gezeigt, wie durch das Signal sM1 angedeutet. Die Messanordnung 10 umfasst eine Lichtquelle LQ, einen optischen Sensor 20, eine optische Faser 28 (z.B. eine Single-Mode oder eine Multi-Mode Faser) und eine Optikanordnung 22 (die z.B. eine feste oder auswechselbare Abbildungsoptik 24 umfassen kann). In dem ersten Betriebsmodus M1 wird von der Lichtquelle LQ Licht LS in dem ersten, schmalen Wellenlängenbereich Δλ1 durch die Faser 28 und die Optikanordnung 22 hindurch in Richtung der Objektebene OE ausgesendet. Dort wird das Licht LS reflektiert und/oder gestreut, um als Licht LR zurück durch die Optikanordnung 22 und die Faser 28 hindurch zum optischen Sensor 20 zu gelangen. In Fig. 8B ist schematisch gezeigt, dass der erste, schmale Wellenlängenbereich Δλ1 z.B. im Bereich des grünen Lichtspektrums (mit Zentralfrequenz z.B. bei 520nm) liegen kann. In Fig. 8C ist schematisch die Intensität IE am optischen Sensor 20 gezeigt. Da die Meßvorrichtung 10 verlustbehaftet ist, ist die Intensität IE am optischen Sensor 20 kleiner als die Intensität I, die von der Lichtquelle LQ ausgestrahlt wird.

Wie bereits angedeutet, ist der opto-elektronische Teil 12 Teil einer Koordinaten-Meßvorrichtung integriert oder an die Achsen einer Koordinaten-Meßvorrichtung angebaut. Es ist ein Vorteil einer Koordinaten-Meßvorrichtung 10 mit opto-elektronischem Teil 12, dass eine oder mehrere der NC-steuerbaren Achsen der Koordinaten-Meßvorrichtung genutzt werden können, um den opto-elektronischen Teil 12 relativ zu dem Zahnrad-Bauteil 11 zu bewegen und zu positionieren.

Bei allen Ausführungsformen werden NC-gesteuerte Bewegungen des opto-elektronischen Teils 12 relativ zu dem Zahnrad-Bauteil 11 ausgeführt, um z.B. im ersten Betriebsmodus M1 eine möglichst hohe Intensität IE am optischen Sensor 20 zu erzielen. Das kann z.B. durch das NC-gesteuerte Verändern des relativen Meßabstandes MA* und/oder durch das NC-gesteuerte Verändern des Anstrahlwinkels zwischen der optischen Achse OA und der Tangente am Lichtpunkt LP an der Objektebene geschehen.

NC-gesteuerte Bewegungen der optischen Koordinaten-Messvorrichtung 10 können bei allen Ausführungsformen durch einen Algorithmus so gesteuert werden, dass z.B. im ersten Betriebsmodus M1 der relative Meßabstand MA* und/oder der Anstrahlwinkel iterativ modifiziert werden, bis eine maximale Intensität IE am optischen Sensor 20 erzielt wird.

Sobald bei diesem Ausführungsbeispiel die maximale Intensität IE erreicht ist, kann ein Wechsel in den zweiten Betriebsmodus M2 erfolgen. In Fig. 8D ist die optische Messanordnung 10 in dem zweiten Betriebsmodus M2 gezeigt, wie durch das Signal sM2 angedeutet. In Fig. 8E ist schematisch gezeigt, dass der zweite, breitere Wellenlängenbereich Δλ2 z.B. im Bereich des blauen bis gelben Lichtspektrums (z.B. ein Wellenlängenbereich zwischen 450nm bis 580nm) liegt. Gemäß dem Prinzip der konfokal chromatischen Mikroskopie, wird das Licht LS mit dem in Fig. 8E gezeigten Spektrum in die Farbanteile λg, λgr und λb aufgeteilt. Jeder dieser Farbanteile hat einen anderen Fokuspunkt. D.h. es kommt zu einer monochromatischen Trennung der unterschiedlichen Farbanteile, wie in Fig. 8D im Bereich zwischen der Abbildungsoptik 22 und der Objektebene OE anhand von drei Strahlengängen λb, λgr, λg gezeigt, die je einen anderen Fokuspunkt haben.

Bei dem in Fig. 8D gezeigten Beispiel wurde der relative Meßabstand MA, z.B. ausgehend von MA*, durch NC-gesteuerte Bewegungen so verändert, dass der Fokuspunkt des gelben Lichtanteils λg exakt auf der Objektebene OE liegt. In Fig. 8F ist schematisch die Intensität IE am optischen Sensor 20 gezeigt. Da die Meßvorrichtung 10 verlustbehaftet ist, ist die Intensität IE am optischen Sensor 20 kleiner als die Intensität I, die von der Lichtquelle LQ im zweiten Betriebsmodus M2 ausgestrahlt wird. Da der Fokuspunkt des gelben Lichtanteils λg exakt auf der Objektebene OE liegt, empfängt der Sensor 20 lediglich einen sehr schmalen Intensitätspeak IE im gelben Spektralbereich.

Die Ausführungsformen der Erfindung ermöglichen einen oder mehrere der folgenden Ansätze:
- Umschalten zwischen mindestens zwei verschiedenen Betriebsmodi, um z.B. in einem Betriebsmodus in einem schmalbandigen Wellenlängenbereich und in einem anderen Betriebsmodus in einem breitbandigen Wellenlängenbereich optisch zu messen;
- Umschalten zwischen mindestens zwei verschiedenen Betriebsmodi, um z.B. in einem Betriebsmodus konfokal (quasi-monochromatisch) optisch und in einem anderen Betriebsmodus konfokal-chromatisch optisch zu messen;
- Auswählen eines geeigneten Wellenlängenbereichs in Abhängigkeit vom Reflektions- oder Streuverhalten der Oberfläche eines Zahnrad-Bauteils 10;
- Umschalten zwischen mindestens zwei verschiedenen Betriebsmodi, um z.B. in einem Betriebsmodus in einem schmalbandigen Wellenlängenbereich nach dem Prinzip eines Laser-Triangulationssensors schnell erste Messwerte zu erhalten, und um dann in einem anderen Betriebsmodus z.B. konfokal-chromatisch optisch zu messen.

**Bezugszeichen:**

| | |
|---|---|
| Zähne | 1.1, 1.2 |
| Meßgerät / (Koordinaten-) Meßvorrichtung | 10 |
| Zahnrad-Bauteil | 11 |
| Opto-elektronischer Teil | 12 |
| NC-gesteuerter Teil | 13 |
| Optischer Sensor / Mess-Sensor / Detektor | 20 |
| Optikanordnung | 22 |
| Strahlteiler / Beam-Splitter(-Cube) | 23 |
| Linsengruppe / Abbildungsoptik / Optikanordnung / Objektiv | 24 |
| optischer Koppler / optische Weiche | 25 |
| optischer Schalter / optische Weiche | 26 |
| (Single-Mode oder Multimode) Faser | 28 |
| | |
| Breitband-Lichtquelle | BL |
| erster Detektor | D1 |
| zweiter Detektor | D2 |
| erste Gruppe | G1 |
| zweite Gruppe | G2 |
| Lichtintensität | I |
| Lichtintensität am Sensor | IE |
| Lichtkegel | LK |
| Lichtpunkt | LP |
| Lichtquelle | LQ |
| reflektierter/gestreuter Lichtstrahl, reflektiertes/gestreutes Licht | LR |
| Lichtstrahl, Licht | LS |
| Wellenlänge | λ |
| Wellenlängen von rot bis blau | λr, λg, λgr, λb |
| erster, schmaler Wellenlängenbereich/ schmalbandiges Lichtspektrum | Δλ1 |
| zweiter, breiterer Wellenlängenbereich/ breitbandiges Lichtspektrum | Δλ2 |
| breitbandiger Wellenlängenbereich | Δλ3 |
| Meßabstand | MA, MA* |
| Signal | sM1, sM2 |
| Signal | sM1/M2 |
| Betriebsmodi | M1, M2 |
| optische Achse | OA |
| Objektebene | OE |
| Schmalband-Lichtquelle | SL |
| Sensorkopf | SK |
| (NC-gesteuerte) Achsen | x, y, z |
| (NC-gesteuerte) Drehachse | ωz |

## Patentansprüche

1. Optische Koordinaten-Messvorrichtung (10) mit
- einer Lichtquelle (LQ), die dazu ausgelegt entweder Licht in einem ersten, schmalen Wellenlängenbereich (Δλ1) oder Licht in einem zweiten, breiteren Wellenlängenbereich (Δλ2) auszusenden, oder mit einer Lichtquelle (LQ), die dazu ausgelegt Licht (LS) in einem breitbandigen Wellenlängenbereich (Δλ3) auszusenden,
- einen optischen Sensor (20),
- einer Optikanordnung (24), die dazu ausgelegt Licht (LS) der Lichtquelle (LQ) in Richtung einer Objektebene (OE) zu führen und Licht (LR), das an der Objektebene (OE) reflektiert und/oder gestreut wird, zu dem optischen Sensor (20) zu führen,
wobei
- die Messvorrichtung (10) dazu ausgelegt ist mindestens in einem ersten Betriebsmodus (M1) und in einem zweiten Betriebsmodus (M2) betrieben zu werden,
und wobei
- entweder im ersten Betriebsmodus (M1) von der Lichtquelle (LQ) Licht (LS) in dem ersten, schmalen Wellenlängenbereich (Δλ1) und im zweiten Betriebsmodus (M2) von der Lichtquelle (LQ) Licht (LS) in dem zweiten, breiteren Wellenlängenbereich (Δλ2) ausgesendet wird,
- oder im ersten Betriebsmodus (M1) von der Lichtquelle (LQ) Licht (LS) in dem breitbandigen Wellenlängenbereich (Δλ3) ausgesendet und von dem optischen Sensor (20) Licht (LR) in einem ersten Teilbereich des breitbandigen Wellenlängenbereichs (Δλ3) ausgewertet wird und im zweiten Betriebsmodus (M2) von der Lichtquelle (LQ) Licht (LS) in dem breitbandigen Wellenlängenbereich (Δλ3) ausgesendet und von dem optischen Sensor (20) Licht (LR) in einem zweiten Teilbereich des breitbandigen Wellenlängenbereichs (Δλ3) ausgewertet wird.

2. Koordinaten-Messvorrichtung (10) nach Anspruch 1, **dadurch gekennzeichnet, dass** es sich bei dem ersten Betriebsmodus (M1) um einen konfokal-optischen Betriebsmodus und bei dem zweiten Betriebsmodus (M2) um einen konfokal-chromatisch optischen Betriebsmodus handelt.

3. Koordinaten-Messvorrichtung (10) nach Anspruch 2, **dadurch gekennzeichnet, dass** es in dem konfokal-chromatisch optischen Betriebsmodus zu einer monochromatischen Trennung unterschiedlicher Farbanteile des Lichts des zweiten, breiteren Wellenlängenbereichs (Δλ2) kommt, so dass im Bereich der Objektebene (OE) mindestens zwei unterschiedliche Fokuspunkte gebildet werden.

4. Koordinaten-Messvorrichtung (10) nach Anspruch 2 oder 3, **dadurch gekennzeichnet, dass** in dem konfokal-chromatisch optischen Betriebsmodus
- ein konfokal-chromatischer, optischer Sensor, vorzugsweise ein Spektrometer, als optischer Sensor (20), und/oder
- eine Breitband-Lichtquelle als Lichtquelle (LQ) zum Einsatz kommen/kommt.

5. Koordinaten-Messvorrichtung (10) nach Anspruch 2 oder 3, **dadurch gekennzeichnet, dass** in dem konfokal-optischen Betriebsmodus
- ein Halbleiterdetektor als optischer Sensor (20), und/oder
- eine Schmalband-Lichtquelle als Lichtquelle (LQ) zum Einsatz kommen/kommt.

6. Koordinaten-Messvorrichtung (10) nach Anspruch 1 oder 2, **dadurch gekennzeichnet, dass** es sich um eine Lichtquelle (LQ) handelt, die entweder in einem ersten Betriebsmodus oder in einem zweiten Betriebsmodus betreibbar ist, wobei die Lichtquelle (LQ) in dem ersten Betriebsmodus Licht in dem ersten, schmalen Wellenlängenbereich (Δλ1) und in dem zweiten Betriebsmodus Licht in dem zweiten, breiteren Wellenlängenbereich (Δλ2) aussendet.

7. Koordinaten-Messvorrichtung (10) nach Anspruch 1 oder 2, **dadurch gekennzeichnet, dass** Lichtquelle (LQ) eine Breitband-Lichtquelle (BL) und eine Schmalband-Lichtquelle (SL) umfasst.

8. Koordinaten-Messvorrichtung (10) nach Anspruch 6, **dadurch gekennzeichnet, dass** sie einen optischen Koppler oder eine optische Weiche (25) umfasst, um Licht der Breitband-Lichtquelle (BL) und Licht der Schmalband-Lichtquelle (SL) zusammen zu führen.

9. Koordinaten-Messvorrichtung (10) nach einem der Ansprüche 1 bis 8, **dadurch gekennzeichnet, dass** es sich um eine Koordinaten-Messvorrichtung handelt, die mindestens eine NC-gesteuerte Messachse (x, y, z, ωz) umfasst.

10. Koordinaten-Messvorrichtung (10) nach Anspruch 9, **dadurch gekennzeichnet, dass** die Lichtquelle (LQ), der optischen Sensor (20) und die Optikanordnung (24) Bestandteil einer opto-elektronischen Teils (12) der Koordinaten-Messvorrichtung (10) bilden, wobei dieser opto-elektronische Teil (12) durch eine Bewegung der mindestens einen NC-gesteuerten Messachse (x, y, z, ωz) relativ zu der Objektebene (OE) verlagert werden kann.

11. Koordinaten-Messvorrichtung (10) nach einem der Ansprüche 1 bis 10, **dadurch gekennzeichnet, dass** sie zum Messen von Objektebenen (OE) von Zahnrädern (11) oder zahnrad-ähnlichen Bauteilen ausgelegt ist.

12. Verfahren zum Betreiben einer Koordinaten-Messvorrichtung (10), die einen opto-elektronischen Teil (12) mit einer Lichtquelle (LQ), einem optischen Sensor (20) und einer Optikanordnung (24), sowie mindestens eine NC-gesteuerte Messachse (x, y, z, ωz) zum Bewegen des opto-elektronischen Teils (12) relativ zu einem Zahnrad (11) oder zahnrad-ähnlichen Bauteil umfasst, mit den Schritten:
- Betreiben des opto-elektronischen Teils (12) in einem ersten Betriebsmodus (M1) oder
- Betreiben des opto-elektronischen Teils (12) in einem zweiten Betriebsmodus (M2),
wobei
- entweder in dem ersten Betriebsmodus (M1) von der Lichtquelle (LQ) Licht (LS) einem ersten, schmalen Wellenlängenbereich (Δλ1) und in dem zweiten Betriebsmodus (M2) von der Lichtquelle (LQ) Licht (LS) in einem zweiten, breiteren Wellenlängenbereich (Δλ2) ausgesendet wird,
- oder im ersten Betriebsmodus (M1) von der Lichtquelle (LQ) Licht (LS) in einem breitbandigen Wellenlängenbereich (Δλ3) ausgesendet und von dem optischen Sensor (20) Licht (LR) in einem ersten Teilbereich des breitbandigen Wellenlängenbereichs (Δλ3) ausgewertet wird und im zweiten Betriebsmodus (M2) von der Lichtquelle (LQ) Licht (LS) in dem breitbandigen Wellenlängenbereich (Δλ3) ausgesendet und von dem optischen Sensor (20) Licht (LR) in einem zweiten Teilbereich des breitbandigen Wellenlängenbereichs (Δλ3) ausgewertet wird.

13. Verfahren nach Anspruch 12, **dadurch gekennzeichnet, dass** in dem ersten Betriebsmodus (M1) von der Lichtquelle (LQ) Licht (LS) dem ersten, schmalen Wellenlängenbereich (Δλ1) und in dem zweiten Betriebsmodus (M2) von der Lichtquelle (LQ) Licht (LS) in dem zweiten, breiteren Wellenlängenbereich (Δλ2) ausgesendet wird und, dass der optische Sensor (20) sowohl im ersten Betriebsmodus (M1) als auch im zweiten Betriebsmodus (M2) eine konfokal-chromatische Auswertung vornimmt.

14. Verfahren nach Anspruch 12, **dadurch gekennzeichnet, dass** in dem ersten Betriebsmodus (M1) von der Lichtquelle (LQ) Licht (LS) dem ersten, schmalen Wellenlängenbereich (Δλ1) und in dem zweiten Betriebsmodus (M2) von der Lichtquelle (LQ) Licht (LS) in dem zweiten, breiteren Wellenlängenbereich (Δλ2) ausgesendet wird und, dass der optische Sensor (20) in dem ersten Betriebsmodus (M1) eine konfokale Auswertung und in dem zweiten Betriebsmodus (M2) eine konfokal-chromatische Auswertung vornimmt.

15. Verfahren nach Anspruch 12, **dadurch gekennzeichnet, dass** in dem ersten Betriebsmodus (M1) von der Lichtquelle (LQ) sichtbares Licht (LS) in dem breitbandigen Wellenlängenbereich (Δλ3) ausgesendet und von dem optischen Sensor (20) sichtbares Licht (LR) konfokal-chromatisch ausgewertet wird und dass im zweiten Betriebsmodus (M2) von der Lichtquelle (LQ) Licht (LS) in einem nahinfrarot-breitbandigen Wellenlängenbereich (Δλ3) ausgesendet und von dem optischen Sensor (20) das nahinfrarot-breitbandige Licht (LR) konfokal-chromatisch ausgewertet wird.

## Geänderte Patentansprüche

### Geänderte Patentansprüche gemäss Regel 137(2) EPÜ.

1. Optische Koordinaten-Messvorrichtung (10) mit
- einer Lichtquelle (LQ), die dazu ausgelegt entweder Licht in einem ersten, schmalen Wellenlängenbereich (Δλ1) oder Licht in einem zweiten, breiteren Wellenlängenbereich (Δλ2) auszusenden
- einen optischen Sensor (20),
- einer Optikanordnung (24), die dazu ausgelegt Licht (LS) der Lichtquelle (LQ) in Richtung einer Objektebene (OE) zu führen und Licht (LR), das an der Objektebene (OE) reflektiert und/oder gestreut wird, zu dem optischen Sensor (20) zu führen,
wobei
- die Messvorrichtung (10) dazu ausgelegt ist mindestens in einem ersten Betriebsmodus (M1) und in einem zweiten Betriebsmodus (M2) betrieben zu werden,
und wobei
- entweder im ersten Betriebsmodus (M1) von der Lichtquelle (LQ) Licht (LS) in dem ersten, schmalen Wellenlängenbereich (Δλ1) und im zweiten Betriebsmodus (M2) von der Lichtquelle (LQ) Licht (LS) in dem zweiten, breiteren Wellenlängenbereich (Δλ2) ausgesendet wird,
- **dadurch gekennzeichnet, dass** es sich um eine Lichtquelle (LQ) handelt, die entweder in einem ersten Betriebsmodus oder in einem zweiten Betriebsmodus betreibbar ist, wobei die Lichtquelle (LQ) in dem ersten Betriebsmodus Licht in dem ersten, schmalen Wellenlängenbereich (Δλ1) und in dem zweiten Betriebsmodus Licht in dem zweiten, breiteren Wellenlängenbereich (Δλ2) aussendet.

2. Koordinaten-Messvorrichtung (10) nach Anspruch 1, **dadurch gekennzeichnet, dass** es sich bei dem ersten Betriebsmodus (M1) um einen konfokal-optischen Betriebsmodus und bei dem zweiten Betriebsmodus (M2) um einen konfokal-chromatisch optischen Betriebsmodus handelt.

3. Koordinaten-Messvorrichtung (10) nach Anspruch 2, **dadurch gekennzeichnet, dass** es in dem konfokal-chromatisch optischen Betriebsmodus zu einer monochromatischen Trennung unterschiedlicher Farbanteile des Lichts des zweiten, breiteren Wellenlängenbereichs (Δλ2) kommt, so dass im Bereich der Objektebene (OE) mindestens zwei unterschiedliche Fokuspunkte gebildet werden.

4. Koordinaten-Messvorrichtung (10) nach Anspruch 2 oder 3, **dadurch gekennzeichnet, dass** in dem konfokal-chromatisch optischen Betriebsmodus
- ein konfokal-chromatischer, optischer Sensor, vorzugsweise ein Spektrometer, als optischer Sensor (20)
zum Einsatz kommt.

5. Koordinaten-Messvorrichtung (10) nach Anspruch 2 oder 3, **dadurch gekennzeichnet, dass** in dem konfokal-optischen Betriebsmodus
- ein Halbleiterdetektor als optischer Sensor (20)
zum Einsatz kommt.

6. Koordinaten-Messvorrichtung (10) nach einem der Ansprüche 1 bis 5, **dadurch gekennzeichnet, dass** es sich um eine Koordinaten-Messvorrichtung handelt, die mindestens eine NC-gesteuerte Messachse (x, y, z, ωz) umfasst.

7. Koordinaten-Messvorrichtung (10) nach Anspruch 6, **dadurch gekennzeichnet, dass** die Lichtquelle (LQ), der optischen Sensor (20) und die Optikanordnung (24) Bestandteil einer opto-elektronischen Teils (12) der Koordinaten-Messvorrichtung (10) bilden, wobei dieser optoelektronische Teil (12) durch eine Bewegung der mindestens einen NCgesteuerten Messachse (x, y, z, ωz) relativ zu der Objektebene (OE) verlagert werden kann.

8. Koordinaten-Messvorrichtung (10) nach einem der Ansprüche 1 bis 7, **dadurch gekennzeichnet, dass** sie zum Messen von Objektebenen (OE) von Zahnrädern (11) oder zahnrad-ähnlichen Bauteilen ausgelegt ist.

9. Verfahren zum Betreiben einer Koordinaten-Messvorrichtung (10), die einen opto-elektronischen Teil (12) mit einer Lichtquelle (LQ), einem optischen Sensor (20) und einer Optikanordnung (24), sowie mindestens eine NC-gesteuerte Messachse (x, y, z, ωz) zum Bewegen des opto-elektronischen Teils (12) relativ zu einem Zahnrad (11) oder zahnrad-ähnlichen Bauteil umfasst, mit den Schritten:
- Betreiben des opto-elektronischen Teils (12) in einem ersten Betriebsmodus (M1) oder
- Betreiben des opto-elektronischen Teils (12) in einem zweiten Betriebsmodus (M2),
wobei
- entweder in dem ersten Betriebsmodus (M1) von der Lichtquelle (LQ) Licht (LS) einem ersten, schmalen Wellenlängenbereich (Δλ1) und in dem zweiten Betriebsmodus (M2) von der Lichtquelle (LQ) Licht (LS) in einem zweiten, breiteren Wellenlängenbereich (Δλ2) ausgesendet wird
- **dadurch gekennzeichnet, dass** es sich um eine Lichtquelle (LQ) handelt, die entweder in einem ersten Betriebsmodus oder in einem zweiten Betriebsmodus betreibbar ist, wobei die Lichtquelle (LQ) in dem ersten Betriebsmodus Licht in dem ersten, schmalen Wellenlängenbereich (Δλ1) und in dem zweiten Betriebsmodus Licht in dem zweiten, breiteren Wellenlängenbereich (Δλ2) aussendet.

10. Verfahren nach Anspruch 9, **dadurch gekennzeichnet, dass** in dem ersten Betriebsmodus (M1) von der Lichtquelle (LQ) Licht (LS) dem ersten, schmalen Wellenlängenbereich (Δλ1) und in dem zweiten Betriebsmodus (M2) von der Lichtquelle (LQ) Licht (LS) in dem zweiten, breiteren Wellenlängenbereich (Δλ2) ausgesendet wird und, dass der optische Sensor (20) sowohl im ersten Betriebsmodus (M1) als auch im zweiten Betriebsmodus (M2) eine konfokal-chromatische Auswertung vornimmt.

11. Verfahren nach Anspruch 9, **dadurch gekennzeichnet, dass** in dem ersten Betriebsmodus (M1) von der Lichtquelle (LQ) Licht (LS) dem ersten, schmalen Wellenlängenbereich (Δλ1) und in dem zweiten Betriebsmodus (M2) von der Lichtquelle (LQ) Licht (LS) in dem zweiten, breiteren Wellenlängenbereich (Δλ2) ausgesendet wird und, dass der optische Sensor (20) in dem ersten Betriebsmodus (M1) eine konfokale Auswertung und in dem zweiten Betriebsmodus (M2) eine konfokal-chromatische Auswertung vornimmt.

12. Verfahren nach Anspruch 9, **dadurch gekennzeichnet, dass** in dem ersten Betriebsmodus (M1) von der Lichtquelle (LQ) sichtbares Licht (LS) in dem breitbandigen Wellenlängenbereich (Δλ3) ausgesendet und von dem optischen Sensor (20) sichtbares Licht (LR) konfokal-chromatisch ausgewertet wird und dass im zweiten Betriebsmodus (M2) von der Lichtquelle (LQ) Licht (LS) in einem nahinfrarot-breitbandigen Wellenlängenbereich (Δλ3) ausgesendet und von dem optischen Sensor (20) das nahinfrarot-breitbandige Licht (LR) konfokal-chromatisch ausgewertet wird.
